(19) Europäisches Patentamt

European Patent Office

Office européen des brevets

(11) EP 0 684 931 B1

(12) EUROPEAN PATENT SPECIFICATION

(45) Date of publication and mention
of the grant of the patent:
08.07.1998 Bulletin 1998/28

(51) Int Cl.$^6$: C01B 17/04, B01D 53/52,
B01J 27/16

(21) Application number: 94904346.7

(22) Date of filing: 29.12.1993

(86) International application number:
PCT/NL93/00281

(87) International publication number:
WO 94/14703 (07.07.1994 Gazette 1994/15)

(54) **METHOD FOR DESULFURIZING A GAS**

VERFAHREN ZUR ENTSCHWEFLUNG EINES GASES

PROCEDE DE DESULFURATION D'UN GAZ

(84) Designated Contracting States:
DE ES FR IT NL

(30) Priority: 29.12.1992 NL 9202283

(43) Date of publication of application:
06.12.1995 Bulletin 1995/49

(73) Proprietor: GASTEC N.V.
NL-7327 AC Apeldoorn (NL)

(72) Inventors:
• GEUS, John, Wilhelm
NL-3723 GJ Bilthoven (NL)
• VAN YPEREN, Renee
NL-3632 XC Loenen aan de Vecht (NL)

(74) Representative:
Smulders, Theodorus A.H.J., Ir. et al
Vereenigde Octrooibureaux
Nieuwe Parklaan 97
2587 BN 's-Gravenhage (NL)

(56) References cited:
EP-A- 0 242 920          EP-A- 0 409 353
US-A- 4 311 683          US-A- 4 743 574

**Description**

This invention relates to a method for desulfurizing gases by absorption of $H_2S$ on absorbents based on metal oxides provided on a support.

It is generally known that it is necessary that gases which are further processed in chemical processes, are supplied by buyers or are released into the atmosphere, be purified of sulfur compounds, in particular hydrogen sulfide.

A problem associated with the gasification of coal or heavy petroleum fractions is that hydrogen sulfide is formed. Hydrogen sulfide should be removed because of its corrosive character and its poisonousness to catalysts which are used to convert such gases into useful compounds. In the case where the sulfur-containing gas is used as fuel gas, for instance in power stations, the hydrogen sulfide content, for environmental reasons and because of its corrosive action, should preferably be below 100 ppm. In the case where the gas is used as feed for catalytic conversions, the aim is to keep the $H_2S$ content below 25 ppm, preferably below 10 ppm.

Accordingly, a number of methods are known which are directed to the removal of hydrogen sulfide from gas.

There are a large number of methods known for the removal of hydrogen sulfide from gas streams by adsorption or absorption on solid substances. In the purification of gas streams coming from the gasification of coal or oil, for instance, involving particularly large amounts having a high temperature, often metal oxides are used for that purpose. Very typical are so-called bulk metal oxides, but the disintegration thereof during the absorption and regeneration results in dust formation, which renders these materials little attractive. The problem of disintegration can at least partly be overcome by the use of highly dispersed metal oxide on a stable support.

For such purposes, it is known to use silicon dioxide as a support for iron oxide. In the literature (EP-A-71,983) an iron oxide absorbent on silicon dioxide is described, which exhibits a good conversion degree and stability.

The publication by Abel, Shultz and Langdon, Bur. Mines RI 7947 (1974) describes the results of an investigation into the usefulness of a large number of solid absorbents for the removal of hydrogen sulfide from hot gases. It appears from this publication that a large number of compounds, mainly metal compounds, exhibit an absorption of hydrogen sulfide. Examples include compounds of iron, magnesium, calcium, boron, copper, cerium, molybdenum, yttrium, lanthanum, cobalt and zinc. Substantially all of these compounds were tested as oxides, hydroxides or carbonates, in the form of granules sintered with fly ash. The best results were obtained with sintered granules comprising 75% fly ash with 25% iron oxide. At approx. 800°C, these yielded an absorption capacity of approximately 40 g sulfur per 100 g absorbent. These absorbents exhibit the same drawback as described hereinabove with respect to bulk metal oxides, viz. disintegration during absorption and during regeneration.

The article by Furimsky at al, Solid adsorbents for removal of hydrogen sulfide from hot gases, Wissenschaft & Technik, Bd. 39, Heft 4, April 1986, pp. 163-172, gives an overview of absorbents described in the literature for the absorption of hydrogen sulfide from hot gases. Examples of absorbents described therein include compounds of calcium, magnesium, iron, manganese, zinc, molybdenum, tungsten, nickel, cobalt, barium, vanadium and copper. According to the authors, deactivated cracking catalysts based on molybdenum, cobalt and nickel on aluminum oxide, after the cokes are burnt off, are suitable as absorbent.

The absorbents described in this article, too, exhibit the above-indicated drawbacks of disintegration and the associated dust formation. In the deactivated cracking catalysts referred to, this is caused by the reaction of the aluminum oxide to form sulfate. Further, a large number of the materials described have the disadvantage of a slight temperature resistance, which, after some tine, leads to sintering and accordingly to loss of activity. A number of materials moreover exhibit the property of volatilizing at higher temperatures, which is undesired in view of the environment and the loading degree.

Finally, a number of prior art materials present a problem in that they are very difficult to regenerate, if at all.

The object of the invention is to provide a method for removing hydrogen sulfide from gas streams, in which the problems outlined do not occur or do so to a much lesser extent.

The invention relates to a method for removing $H_2S$ from gases as defined in Claim 1, comprising contacting the gases with an absorbent based on at least one metal oxide on support, with aluminum phosphate being used as support.

Surprisingly, it has been found that when such support materials based on amorphous, non-crystalline aluminum phosphate are used in the removal of hydrogen sulfide from gas streams, the disadvantages referred to do not occur or do so to a much lesser extent, while moreover a number of unexpected advantages are present.

When used as absorbent, no problems with regard to metal sulfate formation occur, not even if a major proportion of aluminum relative to the phosphate is present in the support. Accordingly, the absorbent is particularly easy to regenerate. In this connection, it is not necessary to make use of a multi-stage regeneration process.

Another advantage of the present invention resides in the fact that the support, at the temperatures used in high-temperature desulfurization, is particularly stable and will retain its original structure completely or substantially completely, even in the case of prolonged use and frequent regeneration.

The structure of the amorphous aluminum phosphate support can be adjusted particularly well by varying the conditions of preparation, such as pH, temperature and the aluminum to phosphate ratio. In this connectiom, it is for instance possible to work with a minor proportion of aluminum or with a major proportion of aluminum relative to the stoichiometric amount that is required. It is also possible to work with substantially stoichiometric amounts of aluminum and phosphate.

Surprisingly, it has been found that with the invention, it is no problem if an aluminum phosphate is used comprising amounts of aluminum and phosphate deviating from the stoichiometric amount. Although it could be expected that in particular the use of a major proportion of aluminum would give rise to problems of sulfate and sulfide formation, it has been found that such is not the case at all.

The aluminum phosphate support material can be prepared in various manners. In general, the preparation will start from separate aqueous solutions of a soluble phosphate and a soluble aluminum compound. From the viewpoint of solubility, aluminum nitrate and ammonium phosphate are preferred. The solutions are put together, whereby aluminum phosphate precipitates.

This can be effected by simultaneously injecting both solutions at preferably constant pH into a reactor in which, if desired, water or an aqueous solution may already be present. It is also possible to initially provide either solution in the reactor and inject the other solution. In general, this will not be done at constant pH.

In the method according to the invention, in which the solid substance functions as regenerable absorbent, use is made of one or more metal oxides supported on the aluminum phosphate which act as absorbent for $H_2S$. The metal is selected from the suitable metals for absorption, such as calcium, magnesium, iron, manganese, zinc, molybdenum, tungsten, nickel, cobalt, barium, vanadium and copper, or combinations of two or more of these metals.

The distribution of the metal oxide over the support is of importance since a poor distribution detracts from the absorbing power. The active component is preferably present on the support as homogeneously as possible. This can be realized through accurate selection of the method of application and/or through the choice of the loading degree.

The specific surface preferably amounts to 5 to 500 $m^2/g$, whilst the average pore diameter, based on cylindrical pores, is between 1 and 100 nm.

Within the concept of the invention, specific surface is understood to mean the BET surface as defined by S. Brunauer et al. in J.A.C.S. 60, 309 (1938). Use was made of a nitrogen adsorption at 77 K according to the so-called three-point measurement. For the purpose of the calculation, the surface of a nitrogen molecule was assumed to be 16.2 $Å^2$.

The average pore radius is determined starting from a cylindrical pore model using the following formula:

$$\text{Average pore radius (Å)} = \frac{20.000 \text{ x pore volume } (cm^3/g)}{\text{BET surface } (m^2/g)}$$

The pore volume used herein is gravimetrically determined by impregnation with water under vacuum. The specific pore volume can further be determined using mercury porosimetry up to a pressure of 2000 bar. The values obtained with the two methods show a good correspondence.

The extent of removal of the hydrogen sulfide will be adjusted depending on the application contemplated. For the less critical applications, the typical aim is for the $H_2S$ content not to exceed 100 ppm. When using catalytic conversions of the treated gas with sulfur-sensitive catalysts, the hydrogen sulfide content should naturally be significantly lower. For such applications, the aim is for a content of 25 ppm at most, more particularly 10 ppm at most.

The adjustment of the $H_2S$ content in the treated gas can be effected by varying the time of contact between the gas and the absorbent. On the one hand, this can be effected by varying the gas rate and, on the other, by varying the amount and the height of the bed in which the absorbent is provided. Suitable contact times lie between 0.01 and 10 seconds.

During the absorption of hydrogen sulfide, the greater part of the hydrogen sulfide will react with the metal oxide to form metal sulfide. The regeneration of the absorbent thus loaded with sulfur is accordingly effected through conversion of the metal sulfide with oxygen to form metal oxide. Depending on the amount of oxygen used, the sulfur can be obtained in the form of elemental sulfur, $SO_2$, or mixtures thereof.

In the case where relatively little oxygen is used in the regeneration, substantially elemental sulfur is obtained in the gas. Since sulfur can easily cause stoppages in the further equipment, it is preferred to condense this sulfur directly after the regeneration.

When a large excess of oxygen is used, all of the sulfur is released in the form of $SO_2$. If desired, this can be separated and/or further processed in known manner.

The advantages of the present invention are especially evident in the desulfurization at very high temperatures. These temperatures generally lie above 150°C and more particularly between 400 and 625°C. At these temperatures, therefore, it is possible to regenerate the absorbent, the regeneration being preferably effected at a temperature substantially comparable with that of the absorption.

According to the invention, it is preferred that the contact takes place at a temperature of 150 to 400°C in the case of absorbent based on molybdenum(VI)oxide; and at a temperature of 150 to 625°C, preferably 400 to 625°C, if the absorbent is based on iron(II)molybdate or a combination of iron and molybdenum oxide. When substantially iron oxide is used, working at temperatures of at least 600°C is advantageous, since at lower temperatures iron sulfate is stable and the absorbent can therefore not be simply regenerated.

The absorbents are preferably made by homogeneous deposition precipitation of the metal component or precursor therefor on the finished support. This method is described in J.W. Geus, Prep. of Cat.III, ed. G. Poncelet et al. (1983) pp. 1-25.

According to a preferred embodiment of the invention, the starting-point is an absorbent based on molybdenum, tungsten and/or iron oxides as absorbent component. More particularly molybdenum oxides, iron oxide or combinations thereof are preferred. In practice, the molybdenum oxide may be any suitable molybdenum oxide or mixture containing molybdenum oxide.

The absorbent preferably comprises an active component selected from the group consisting of iron(II)oxide, iron(III)oxide, mixed oxides of iron(II)oxide and iron(III)oxide, molybdenum(VI)oxide, iron molybdate, mixtures of iron(II)oxide and/or iron(III)oxide with molybdenum(VI)oxide and mixtures of iron molybdate with molybdenum(VI)oxide and/or iron(II)oxide and/or iron(III)oxide.

In general, the amount of metal component provided on the support is not critical. This amount can vary within wide limits. The suitable amounts are related to the specific surface of the support and will lie between 1 and 75 wt. %, more particularly between 1 and 50 wt.%. Naturally, the aim is to have a highest possible content of metal component, finely distributed, present on the support since this enables a highest possible loading thereof. It is preferred to utilize a particle size of 0.1 µm at a maximum, more particularly 0.05 µm at a maximum. The lower limit of the particle size is not very critical and is preferably at least 1 nm.

The method according to the invention is especially suitable for treating large amounts of hot gases which may, for instance, originate from the gasification of coal or oil. Such gases are typically used as fuel gas in power stations and other gas-fueled installations. It is also possible to convert such gases catalytically to other compounds, such as ammonia, methanol or higher hydrocarbons, for instance via a Fischer Tropsch synthesis.

The invention will now be illustrated in and by some examples without being limited thereto.

EXAMPLES

1 Experimental procedures

1.1 Preparation of the absorbents

All absorbents were prepared by homogeneous deposition precipitation, as described in J.W. Geus, Prep. of Cat. III, ed. G. Poncelet et al. (1983) pp. 1-25. The absorbents based on molybdenum or silicon dioxide were prepared by injection of an aqueous solution of molybdenum(III)chloride under the surface of a vigorously stirred suspension of silicon dioxide (Aerosil 200, Degussa) at a constant pH of 5. The molybdenum(III)chloride was prepared through electrochemical reduction of an aqueous solution of ammonium-hepta-molybdate (Merck p.a.) at pH 1.

Iron molybdate on silicon dioxide was prepared by coprecipitation of an iron and molybdenum precursor on the support. The use of a solution of iron(III)chloride was not possible because of the redox reaction between $Fe^{3+}$ and $Mo^{3+}$ ions. This resulted in reduction of the iron(III) ions and oxidation of the molybdenum(III) ions. Accordingly, a mixture of iron(II)chloride and molybdenum(III)chloride was used to prevent the formation of molybdenum with a higher valency. The aqueous solution of iron(II) was obtained by dissolving iron powder (Baker 99.99%) in concentrated hydrochloric acid (Merck p.a.).

Utilizing aluminum phosphate as support, we used only the coprecipitation method. In this method $Fe^{3+}$ and $Mo^{6-}$ were used as precursor. The preparation of aluminum phosphate with an aluminum/phosphate ratio of 2 took place at pH 5.

After the homogeneous deposition precipitation, the absorbents were filtered and dried overnight at 120°C. The absorbents were tabletted and broken again. A sieve fraction between 150 and 500 µm was separated and calcined in the air at 500°C at a heating rate of 5°C/minute. After reaching 500°C it was maintained at that temperature for one hour.

In the following table the various absorbents are included.

| Absorbent | | Wt.% $Fe_2O_3$ | Wt.% $MoO_3$ | Molar ratio Fe/Mo |
|---|---|---|---|---|
| $SFe_{12}Mo_{10}$[1] | $SiO_2$ | 12 | 10 | 1 |

[1] Coprecipitation of iron(II) and molybdenum(III)

(continued)

| Absorbent | | Wt.% $Fe_2O_3$ | Wt.% $MoO_3$ | Molar ratio Fe/Mo |
|---|---|---|---|---|
| $PFe_{12}Mo_{10}{}^{2)}$ | $AlPO_4$ | 12 | 10 | 1 |

2) Coprecipitation of iron(III) and molybdenum(IV)

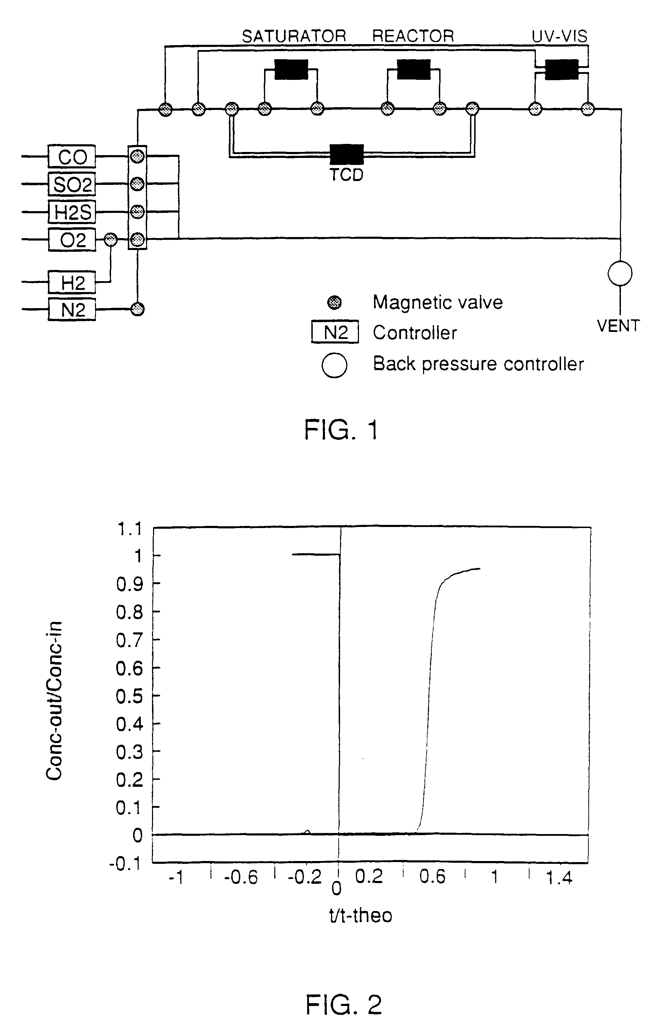

The test procedure which was followed in testing the diverse absorbents was carried out with an appliance as described in Fig. 1. This appliance comprised a gas stream control system with a mass-controlled feed of various gases, magnetic valves, and saturator and reactor oven and analyzing equipment. The gas was analyzed using a thermal conductivity detector (TCD) and a UV-VIS spectrophotometer, Varian Cary 1. With the last, the hydrogen sulfide concentration was measured at 232 nm and the sulfur dioxide concentration at 262 nm.

The experiments consisted of a number of absorption and regeneration cycli, temperature-programmed reductions and oxidations, during which the hydrogen sulfide and sulfur dioxide concentrations were monitored.

During the absorption procedure, use was made of a sample size of 1.5 ml, a reaction mixture of 1 vol.% hydrogen sulfide and 10 vol.% hydrogen in argon with a total amount of 100 ml/minute, a speed of 4000 $hour^{-1}$ and a temperature of 400°C. The absorption step was generally preceded by a reduction step in which any iron sulfates formed were reduced in 10% hydrogen at the same temperature as the absorption step. After the absorption procedure the absorbent was regenerated with a reaction mixture of 2 vol.% oxygen in argon under otherwise equal conditions.

During the temperature-programmed reduction 10 vol.% hydrogen in argon was used and the temperature was increased by 4°C/minute. For the temperature-programmed oxidation a gas mixture of 2 vol.% oxygen in argon was used. During two experiments the reactor was flushed with argon for 10 minutes.

Since the preparation of iron molybdate on silicon dioxide is rather cumbersome, tests were performed with an absorbent on aluminum phosphate. Owing to the positive interaction of the metal precursors with the phosphate groups on the surface of the support, the use of iron(III) and molybdenum(VI) ions is possible. Figure 2 shows a hydrogen sulfide absorption curve of 12 wt.% iron oxide and 10 wt.% molybdenum oxide on aluminum phosphate absorbent $PFe_{12}Mo_{10}$. A similar characteristic curve is obtained as with absorbents based on silicon dioxide. The capacity, however, is somewhat smaller because of interaction of a part of the active compounds with the phosphate groups. The fact is the metal phosphates are not active in the absorption of hydrogen sulfide.

The use of aluminum phosphate as support accordingly simplifies the preparation of iron molybdates considerably. The interaction of the metal precursors with the phosphate groups at the surface make it possible to use iron(III) and molybdenum(VI) as precursor during precipitation. As a result, a high degree of dispersion and thermal stability is obtained.

## Claims

1. A method for removing $H_2S$ from gases, comprising contacting the gases with a solid substance comprising at least one metal oxide on support, with aluminum phosphate being used as support, in which method the $H_2S$ is absorbed on the solid substance, whereby the greater part of the hydrogen sulfide reacts with the metal oxide, to form metal sulfide.

2. A method according to claim 1, characterized in that said metal is selected from the group consisting of calcium, magnesium, iron, manganese, zinc, molybdenum, tungsten, chromium, nickel, cobalt, barium, vanadium and copper, or combinations of two or more of these metals.

3. A method according to claim 2, characterized in that said metal is selected from iron, molybdenum and tungsten, and mixtures of two or more of these metals.

4. A method according to claim 3, characterized in that said metal oxide is selected from the group consisting of iron (II)oxide, iron(III)oxide, mixed oxides of iron(II)oxide and iron(III)oxide, molybdenum(VI)oxide, iron molybdate, mixtures of iron(II)oxide and/or iron(III)oxide with molybdenum(VI)oxide and mixtures of iron molybdate with molybdenum(VI)oxide and/or iron(II)oxide and/or iron(III)oxide.

5. A method according to claims 1-4, characterized in that the content of support material is between 25 and 99 wt.%.

6. A method according to claims 1-5, characterized in that in the aluminum phosphate support material a major proportion of aluminum with regard to phosphate groups is present.

7. A method according to claims 1-5, characterized in that in the aluminum phosphate a minor prpportion of aluminum with regard to phosphate groups is present.

8. A method according to claims 1-5, characterized in that in the aluminum phosphate a substantially stoichiometric amount of aluminum with regard to phosphate groups is present.

9. A method according to claims 1-8, characterized in that the gases are contacted with the solid substance for absorption of the hydrogen sulfide, followed by regeneration of the loaded solid substance at a temperature of 150 to 800°C, preferably of 150 to 625°C.

10. A method according to claim 9, characterized in that the regeneration takes place

at a temperature of 150 to 400°C if the solid substance is based on molybdenum oxide or tungsten oxide;
at a temperature of 150 to 625°C, preferably 400 to 625°C, if the solid substance is based on a combination of molybdenum oxide and/or tungsten oxide with at least one iron oxide; and
at a temperture of at least 600°C if the solid substance is based on an iron oxide.

11. A method according to claims 1-10, characterized in that the solid substance has a specific surface of 5 to 500 $m^2$/g.

12. A method according to claims 1-11, characterized in that the solid substance has an average pore diameter of 1 to 100 nm.

13. A method according to claims 3-12, characterized in that the molar ratio Fe/Mo is 0 to 20.

14. A method according to claims 1-13, wherein the solid substance comprises 5 to 25 wt.% iron oxide.

15. A method according to claims 1-14, wherein the gas to be desulfurized is selected from the group consisting of gases originating from gasification of coal and of oil.

16. A method according to claims 1-15, wherein the treatment with the solid substance occurs under conditions such that the $H_2S$ content in the treated gas is 100 ppm at a maximum, more particularly 25 ppm at a maximum.

17. A method according to claims 1-16, wherein the contact time between gas and the solid substance is between 0.01 and 10 s.

## Patentansprüche

1. Verfahren zur Entfernung von $H_2S$ aus Gasen, bei dem die Gase mit einer mindestens ein Metalloxid auf einem Träger umfassenden Festsubstanz kontaktiert werden, wobei Aluminiumphosphat als Träger verwendet wird, und das $H_2S$ auf der Festsubstanz absorbiert wird, wobei der Hauptanteil des Schwefelwasserstoffs mit dem Metalloxid unter Bildung von Metallsulfid reagiert.

2. Verfahren nach Anspruch 1, dadurch gekennzeichnet, daß das Metall aus der Gruppe bestehend aus Calcium, Magnesium, Eisen, Mangan, Zink, Molybdän, Wolfram, Chrom, Nickel, Kobalt, Barium, Vanadium und Kupfer oder Kombinationen von zwei oder mehr dieser Metalle ausgewählt ist.

3. Verfahren nach Anspruch 2, dadurch gekennzeichnet, daß das Metall aus Eisen, Molybdän und Wolfram sowie Mischungen von zwei oder mehr dieser Metalle ausgewählt ist.

4. Verfahren nach Anspruch 3, dadurch gekennzeichnet, daß das Metalloxid aus der Gruppe bestehend aus Eisen(II)oxid, Eisen(III)oxid, gemischten Oxiden von Eisen(II)oxid und Eisen(III)oxid, Molybdän(VI)oxid, Eisenmolybdat, Mischungen von Eisen(II)oxid und/oder Eisen(III)oxid mit Molybdän(VI)oxid sowie Mischungen von Eisenmolybdat mit Molybdän(VI)oxid und/oder Eisen(II)oxid und/oder Eisen(III)oxid ausgewählt ist.

5. Verfahren nach einem der Ansprüche 1 bis 4, dadurch gekennzeichnet, daß der Gehalt an Trägermaterial 25 bis 99 Gew.-% beträgt.

6. Verfahren nach einem der Ansprüche 1 bis 5, dadurch gekennzeichnet, daß im Aluminiumphosphat-Trägermaterial ein größerer Anteil Aluminium in bezug auf Phosphatgruppen vorhanden ist.

7. Verfahren nach einem der Ansprüche 1 bis 5, dadurch gekennzeichnet, daß im Aluminiumphosphat ein kleinerer Anteil Aluminium in bezug auf Phosphatgruppen vorhanden ist.

8. Verfahren nach einem der Ansprüche 1 bis 5, dadurch gekennzeichnet, daß im Aluminiumphosphat ein im wesentlichen stöchiometrischer Anteil Aluminium in bezug auf Phosphatgruppen vorhanden ist.

9. Verfahren nach einem der Ansprüche 1 bis 8, dadurch gekennzeichnet, daß die Gase mit der Festsubstanz zur Absorption von Schwefelwasserstoff kontaktiert werden und anschließend die beladene Festsubstanz bei einer Temperatur von 150 bis 800 °C, vorzugsweise 150 bis 625 °C regeneriert wird.

10. Verfahren nach Anspruch 9, dadurch gekennzeichnet, daß die Regenerierung

bei einer Temperatur von 150 bis 400 °C, wenn die Festsubstanz auf Molybdänoxid oder Wolframoxid basiert, bei einer Temperatur von 150 bis 625 °C, vorzugsweise 400 bis 625 °C, wenn die Festsubstanz auf einer Kombination von Molybdänoxid und/oder Wolframoxid mit mindestens einem Eisenoxid basiert, und bei einer Temperatur von mindestens 600 °C stattfindet, wenn die Festsubstanz auf einem Eisenoxid basiert.

11. Verfahren nach einem der Ansprüche 1 bis 10, dadurch gekennzeichnet, daß die Festsubstanz eine spezifische Oberfläche von 5 bis 500 $m^2/g$ aufweist.

12. Verfahren nach einem der Ansprüche 1 bis 11, dadurch gekennzeichnet, daß die Festsubstanz einen durchschnittlichen Porendurchmesser von 1 bis 100 nm aufweist.

13. Verfahren nach einem der Ansprüche 3 bis 12, dadurch gekennzeichnet, daß das Molverhältnis Fe/Mo 0 bis 20 beträgt.

14. Verfahren nach einem der Ansprüche 1 bis 13, bei dem die Festsubstanz 5 bis 25 Gew.-% Eisenoxid umfaßt.

15. Verfahren nach einem der Ansprüche 1 bis 14, bei dem das zu entschwefelnde Gas aus der Gruppe bestehend aus Gasen ausgewählt ist, die aus der Vergasung von Kohle oder Öl stammen.

16. Verfahren nach einem der Ansprüche 1 bis 15, bei dem die Behandlung mit der Festsubstanz unter solchen Bedingungen stattfindet, daß der $H_2S$-Gehalt im behandelten Gases höchstens 100 ppm, insbesondere höchstens 25 ppm beträgt.

17. Verfahren nach einem der Ansprüche 1 bis 16, bei dem die Kontaktzeit zwischen Gas und Festsubstanz zwischen 0,01 und 10 Sekunden beträgt.

**Revendications**

1. Procédé pour éliminer $H_2S$ des gaz, comprenant le fait de mettre les gaz en contact avec une substance solide comprenant au moins un oxyde de métal sur un support, le phosphate d'aluminium étant utilisé comme support, dans lequel procédé $H_2S$ est absorbé sur la substance solide, au moyen duquel la plus grande partie du sulfure d'hydrogène réagit avec l'oxyde de métal pour former du sulfure de métal.

2. Procédé selon la revendication 1, caractérisé en ce que ledit métal est choisi dans l'ensemble constitué par le calcium, le magnésium, le fer, le manganèse, le zinc, le molybdène, le tungstène, le chrome, le nickel, le cobalt, le baryum, le vanadium et le cuivre, ou des combinaisons de deux ou plus de deux de ces métaux.

3. Procédé selon la revendication 2, caractérisé en ce que ledit métal est choisi parmi le fer, le molybdène et le tungstène, et des mélanges de deux ou plus de deux de ces métaux.

4. Procédé selon la revendication 3, caractérisé en ce que ledit oxyde de métal est choisi dans l'ensemble constitué par l'oxyde de fer (II), l'oxyde de fer (III), des oxydes mixtes d'oxyde de fer (II) et d'oxyde de fer (III), l'oxyde de molybdène (VI), le molybdate de fer, des mélanges d'oxyde de fer (II) et/ou d'oxyde de fer (III) avec l'oxyde de molybdène (VI), et des mélanges de molybdate de fer avec l'oxyde de molybdène (VI) et/ou l'oxyde de fer (II) et/ou l'oxyde de fer (III).

5. Procédé selon les revendications 1 à 4, caractérisé en ce que la teneur en matériau de support vaut de 25 à 99 % en poids.

6. Procédé selon les revendications 1 à 5, caractérisé en ce que dans le matériau de support de type phosphate d'aluminium, une proportion majeure d'aluminium par rapport aux groupes phosphate est présente.

7. Procédé selon les revendications 1 à 5, caractérisé en ce que dans le phosphate d'aluminium, une proportion mineure d'aluminium par rapport aux groupes phosphate est présente.

8. Procédé selon les revendications 1 à 5, caractérisé en ce que dans le phosphate d'aluminium, une quantité pratiquement stoechiométrique d'aluminium par rapport aux groupes phosphate est présente.

9. Procédé selon les revendications 1 à 8, caractérisé en ce que l'on met les gaz en contact avec la substance solide pour absorber le sulfure d'hydrogène, puis on régénère la substance solide chargée à une température de 150 à 800 °C, de préférence de 150 à 625 °C.

10. Procédé selon la revendication 9, caractérisé en ce que la régénération a lieu :

- à une température de 150 à 400 °C si la substance solide est à base d'oxyde de molybdène ou d'oxyde de tungstène ;
- à une température de 150 à 625 °C, de préférence de 400 à 625 °C, si la substance solide est à base d'une combinaison d'oxyde de molybdène et/ou d'oxyde de tungstène avec au moins un oxyde de fer ; et
- à une température d'au moins 600 °C si la substance solide est à base d'oxyde de fer.

11. Procédé selon les revendications 1 à 10, caractérisé en ce que la substance solide présente une surface spécifique de 5 à 500 $m^2$/g.

12. Procédé selon les revendications 1 à 11, caractérisé en ce que la substance solide présente un diamètre moyen de pore de 1 à 100 nm.

13. Procédé selon les revendications 3 à 12, caractérisé en ce que le rapport molaire Fe/Mo vaut de 0 à 20.

14. Procédé selon les revendications 1 à 13, dans lequel la substance solide comprend de 5 à 25 % en poids d'oxyde de fer.

15. Procédé selon les revendications 1 à 14, dans lequel le gaz à désulfurer est choisi dans l'ensemble constitué des gaz provenant de la gazéification du charbon et de l'huile.

16. Procédé selon les revendications 1 à 15, dans lequel le traitement avec la substance solide se produit dans des conditions telles que la teneur en $H_2S$ dans le gaz traité vaille 100 ppm au plus, plus particulièrement 25 ppm au plus.

17. Procédé selon les revendications 1 à 16, dans lequel le temps de contact entre le gaz et la substance solide vaut de 0,01 à 10 s.

FIG. 1

FIG. 2